## Europäisches Patentamt

## European Patent Office

## Office européen des brevets

(19)

(11) Veröffentlichungsnummer: **0 121 680**
**A2**

# (12) EUROPÄISCHE PATENTANMELDUNG

(21) Anmeldenummer: **84101336.0**

(22) Anmeldetag: **09.02.84**

(51) Int. Cl.³: **H 02 G 1/12**

(30) Priorität: **08.03.83 DE 3308197**

(43) Veröffentlichungstag der Anmeldung: **17.10.84**
**Patentblatt 84/42**

(84) Benannte Vertragsstaaten: **AT CH LI NL SE**

(71) Anmelder: **KAISER ALUMINIUM KABELWERK GMBH,**
**Gradestrasse 100-120, D-1000 Berlin 47 (DE)**

(72) Erfinder: **Becker, Frank, Dipl.-Ing., Ringstrasse 37,**
**D-1000 Berlin 47 (DE)**
Erfinder: **Blankenburg, Bernd, Dr. Ing., Bayernallees 19,**
**D-1000 Berlin 19 (DE)**

(74) Vertreter: **Müller, Hans-Jürgen, Dipl.-Ing. et al, Müller,**
**Schupfner & Gauger**
**Lucile-Grahn-Strasse 38 Postfach 80 13 69,**
**D-8000 München 80 (DE)**

(54) **Rundschälgerät für kunststoffisolierte elektrische Kabel bzw. Adern.**

(57) Kunststoffisolierte, elektrische Kabel können dadurch einfach und genau abgeschält werden, daß sich das Rundschälgerät auf der Ader mittels dreier Walzen abstützt, die zweckmäßigerweise um den Umfang der Ader in im wesentlichen gleichmäßigen Abständen verteilt sind. Dabei empfiehlt es sich, mindestens eine der drei Walzen in bezug zu den anderen beiden Walzen verstellbar zu machen, um Adern unterschiedlicher Aderndurchmesser schälen zu können.

## BESCHREIBUNG

Die Erfindung bezieht sich auf ein Rundschälgerät nach dem
Oberbegriff des Patentanspruchs 1.

Derartige Rundschälgeräte dienen dazu, die äußere Schicht
kunststoffisolierter elektrischer Kabeladern abzutragen.
So ist es für die Montage von Garnituren (Endverschlüsse,
Muffen und dgl.) wichtig, daß bei kunststoffisolierten
Hochspannungskabeln die äußere feldbegrenzende, elektrisch
schwachleitfähige und mit der Isolation fest verschweißte
Schicht zumindest teilweise wieder abgetragen wird.

Der Erfindung liegt die Aufgabe zugrunde, ein Rundschälgerät, das diesen Zweck erfüllt, dahingehend zu verbessern,
daß es ein gleichmäßiges und einfach einstellbares Schälen
erlaubt.

Die Erfindung besteht darin, daß das Gerät mit einer an
der Kabelader angreifenden Vorschubwalze sowie mit einem
Paar Führungswalzen versehen ist, die zusammen mit der
Förderwalze die Ader im wesentlichen zentrieren. Diese
drei Walzen umgeben die Ader in möglichst gleichmäßigen,
über den Umfang der Ader verteilten Abständen und bilden
zusammen mit ihrer Halterung eine Führung für das Gerät
und das Schälmesser. Sind die drei Walzen am Umfang der
Ader an dieses angelegt, so ist es lediglich erforderlich,
das Schälmesser so weit in die Oberfläche der Ader bzw.
den Adermantel einzustechen, daß die der abzutragenden
äußeren Schichtdicke entsprechende Einstichtiefe erreicht
ist. Wird nun das Gerät radial um die Adern herumgeführt,
so wird bei frei drehbarer Vorschubwalze zunächst ein
Rundschnitt (Absetzkante) ausgeführt. Durch Arretieren der

- 3 -

0121680

Vorschubwalze wird dann das Gerät zwangsweise in Axialrichtung vorgetrieben und dadurch allmählich die äußere
Leitschicht der Länge nach abgetragen.

Gemäß einer besonders bevorzugten Ausbildung der Erfindung
sind die Führungswalzen durch Bügel gehalten, welche die
Änderung des gegenseitigen Abstands der Führungswalzen
trotz Beibehaltung der zentrierenden Lage der Ader gestatten. Dadurch ist es möglich, daß der freie Raum zwischen den drei Walzen bzw. deren Angriffs- und Führungsstellen an der Ader verändert werden kann, so daß die erfindungsgemäße Vorrichtung an unterschiedliche Aderdurchmesser anpaßbar ist.

Damit eine möglichst selbsttätige bzw. zwangsgeführte
Vorschubbewegung des Gerätes bzw. Schälmessers in Axialrichtung der Ader stattfindet, empfiehlt es sich, die
Vorschubwalze am Außenumfang mit Führungsorganen zu versehen. Zu diesem Zweck eignet sich besonders ein Außengewinde an der Vorschubwalze, das sich beim Zentrieren der
Ader leicht in deren Oberfläche eindrückt. Hierbei entstehende Rillen sind bedeutungslos, da das Schälmesser
der Vorschubwalze in Schälrichtung nachläuft.

Bei dieser Ausbildung der Erfindung kann das Schälmesser
sehr dicht an die Mantelabsetzkante der Ader herangeführt
werden, da die bevorzugte Schälrichtung von der Mantelabsetzkante zum freien Adernende läuft.

Die breite Walzenführung ermöglicht eine gute und sichere
Führung des Rundschälgeräts auf der Ader und bei Verwendung einer als Gewindewalze ausgebildeten Vorschubwalze verrutscht das Rundschälgerät auch nicht ohne weiteres
in Axialrichtung, so daß der Schälvorgang auch problemlos unterbrochen werden kann.

Weitere Ausbildungen der Erfindung sind in Unteransprüchen
beansprucht und werden in der folgenden Figurenbeschreibung noch erläutert. Darin zeigen

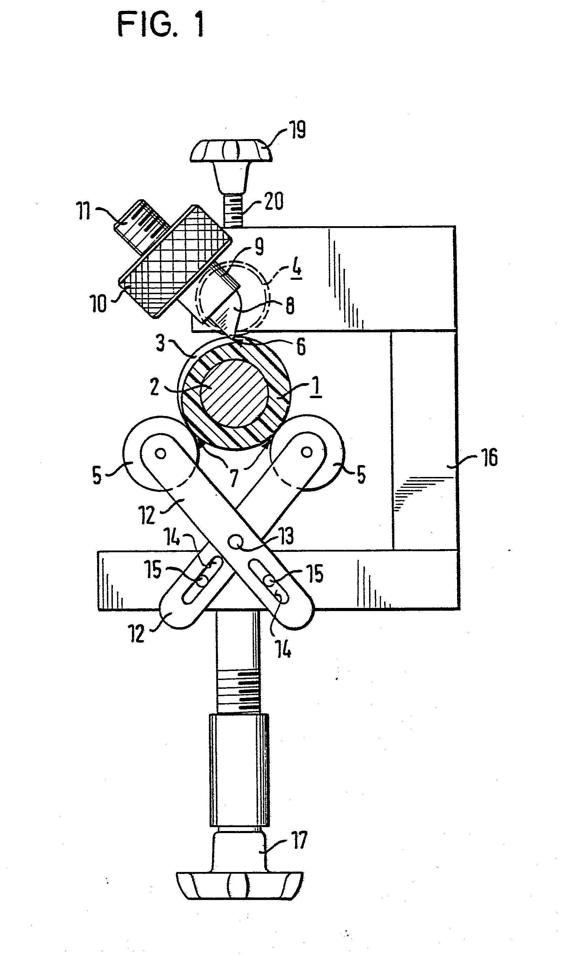

Fig. 1    einen schematischen Querschnitt durch eine Ader
          sowie eine Seitenansicht auf eine besonders bevorzugte Ausbildung der Erfindung und

Fig. 2    eine Aufsicht auf die außen zu beschälende und
          bereits teilweise beschälte Ader mit einigen
          Aggregaten des Rundschälgeräts in teilweise weggebrochener Aufsicht von oben.

Gemäß der Zeichnung stützt sich das Gerät 16 auf dem
Außenumfang der Ader 1 mittels dreier Walzen, nämlich
einer Vorschubwalze 4 und zweier Führungswalzen 5 ab.
Dabei empfiehlt es sich, die Angriffsstelle 6 der Vorschubwalze 4 an der Ader 1 und die Führungsstellen 7
der Führungswalzen 5 an der Ader 1 möglichst gleichmäßig
am Adernumfang zu verteilen, um eine gute zentrierende
Wirkung zu erreichen. Sofern mit ein und demselben Rundschälgerät unterschiedliche Aderdurchmesser bearbeitet
werden sollen, empfiehlt es sich, den freien Durchmesser,
der durch die Angriffstelle 6 und die Führungsstellen 7
gebildet wird, dadurch veränderbar zu machen, daß der
Abstand der Führungswalzen 5 voneinander bzw. von der
Vorschubwalze 4 geändert wird. Dies geschieht bei dem
vorliegenden Ausführungsbeispiel dadurch, daß der Gelenkbolzen 13 durch Verdrehen des Drehknopfes 17 zur Adernachse hin verschoben werden kann. Auf dem Gelenkbolzen 13 sind die Bügel 12 gelagert, welche die Führungswalzen 5 tragen. Die Führungsstifte 15 in den Schlitzen
14 der Bügel 12 sorgen für ein scherenartiges Auf- bzw.
Zufahren, wodurch eine Zentrierung unabhängig vom Aderndurchmesser erfolgt.

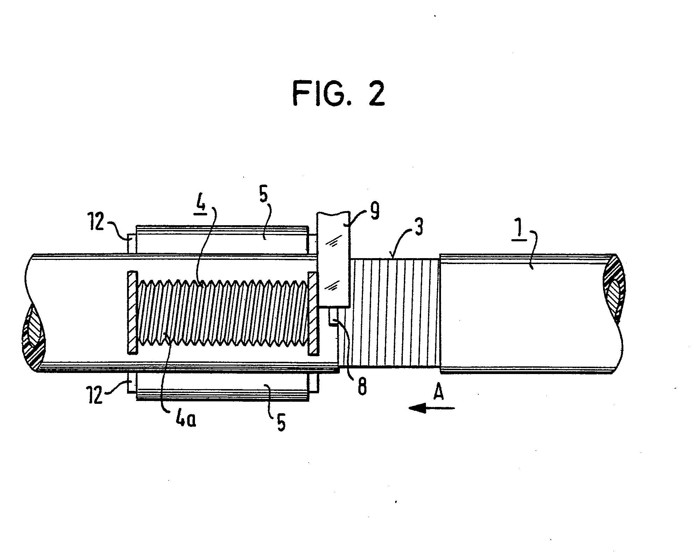

Die Vorschubwalze 4 ist, wie besser aus Fig. 2 ersichtlich
ist, am Außenumfang mit einem Außengewinde 4a versehen.
Nach dem Einstechen der gewünschten Absetzkante wird die
Vorschubwalze 4 mittels des Drehknopfes 19 und Verstellen
des Gewindes 20 arretiert. Hierdurch wird beim Drehen des
Rundschälgeräts auf die Ader 1 ein Vorschub erzeugt und
die Ader 1 zum Kabelende hin in Schälrichtung A bis auf
die in Fig. 2 schematisch dargestellte Tiefe 3 abgeschält.

Zweckmäßig ist es, wenn der vom Schälmesser 8 abgetragene
Span über einen Spanabführungskanal nach außen abgeführt
wird, der zweckmäßigerweise vom Schälmesser 8 innerhalb
der Messerführung 9, der Rändelmutter 10 und des Messerhalters 11 als Bohrung verläuft. Der Span tritt dann durch
die Bohrung im Messerhalter 11 nach oben aus. Die Schnitttiefe des Schälmessers 8 wird durch Verstellen der Rändelmutter 10 und ein selbsthemmendes Gewinde auf dem Messerhalter 11 stufenlos eingestellt.

PATENTANSPRÜCHE

1. Rundschälgerät zum Abtragen (Schälen) einer äußeren
   Schicht von kunststoffisolierten elektrischen Kabeln
   bzw. Adern mittels eines Schälmessers, das in Bezug
   zur Kabelader verstellbar an einem Messerhalter angeordnet ist und beim Drehen auf der angelegten Kabelader
   in die äußere Schicht einschneidet und diese abschält,
   d a d u r c h   g e k e n n z e i c h n e t ,
   daß das Gerät mit einer an der Kabelader (1) an einer
   Angriffsstelle (6) angreifenden Vorschubwalze (4) sowie
   einem Paar Führungswalzen (5) versehen ist, die an Führungsstellen (7) an der Ader (1) angreifen und mit der
   Angriffstelle (6) die Ader (1) im wesentlichen zentrieren.

2. Rundschälgerät nach Anspruch 1,
   d a d u r c h   g e k e n n z e i c h n e t ,
   daß die Führungswalzen (5) durch Bügel (12) gehalten
   sind, welche die Änderung des gegenseitigen Abstands
   der Führungswalzen (5) durch Verstellen eines Verstellorgans, z.B. Drehknopfes (17), unter Beibehaltung der
   zentrierenden Lage der Ader (1) gestatten.

3. Rundschälgerät nach Anspruch 2,
   d a d u r c h   g e k e n n z e i c h n e t ,
   daß die Bügel (12) derart scherenartig verstellbar sind,
   daß die Führungswalzen (5) und die Vorschubwalze (4) zum
   Zentrieren von Adern unterschiedlicher Durchmesser um
   jeweils etwa 120° um den Umfang der Ader (1) versetzt
   an dieser angreifen.

4. Rundschälgerät nach einem der vorhergehenden Ansprüche,
   d a d u r c h   g e k e n n z e i c h n e t ,
   daß die Vorschubwalze (4) mit einem Außengewinde (4a)
   versehen ist.

5. Rundschälgerät nach Anspruch 4,
   d a d u r c h   g e k e n n z e i c h n e t ,
   daß die Steigung (Ganghöhe) des Außengewindes (4a) zwischen 1 und 2 mm beträgt.

6. Rundschälgerät nach einem der vorhergehenden Ansprüche,
   d a d u r c h   g e k e n n z e i c h n e t ,
   daß die Vorschubwalze (4) drehbar und durch ein Verstellorgan arretierbar ist, wodurch ein Zwangsvorschub erfolgt.

7. Rundschälgerät nach einem der vorhergehenden Ansprüche,
   d a d u r c h   g e k e n n z e i c h n e t ,
   daß das Schälmesser (8) in Schälrichtung derart den
   Walzen (4, 5) nachlaufend an einer Messerführung (9) angeordnet ist, daß die bevorzugte Schälrichtung (A) vom
   Mantelabsetzende zum Adernende erfolgt.

8. Rundschälgerät nach einem der vorhergehenden Ansprüche,
   d a d u r c h   g e k e n n z e i c h n e t ,
   daß die Schnittiefe des Schälmessers (8) über ein selbsthemmendes Gewinde bzw. Messerhalter (11) in Radialrichtung der Ader (1) verstellbar ist.

9. Rundschälgerät nach einem der vorhergehenden Ansprüche,
   d a d u r c h   g e k e n n z e i c h n e t ,
   daß der Messerhalter (11) einen Spanabführungskanal aufweist.

FIG. 1

# FIG. 2